# EUROPÄISCHE PATENTSCHRIFT

(11) **EP 2 732 064 B1**
(45) Veröffentlichungstag und Bekanntmachung des Hinweises auf die Patenterteilung: **06.09.2017**
(21) Anmeldenummer: 12710493.3
(22) Anmeldetag: 19.03.2012
(51) Int. Cl.: C22C 30/00, C23C 4/06, C23C 30/00, F16J 9/26, C23C 4/12

(54) **VERSCHLEISSSCHUTZSCHICHT FÜR KOLBENRINGE**
WEAR RESISTANT COATING FOR PISTON RINGS
REVÊTEMENT ANTI-USURE POUR SEGMENTS DE PISTON

(30) Priorität: 12.07.2011 DE 102011079016
(43) Veröffentlichungstag der Anmeldung: 21.05.2014
(73) Patentinhaber: Federal-Mogul Burscheid GmbH, 51399 Burscheid (DE)
(72) Erfinder: ZINNABOLD, Michael, 51399 Burscheid (DE); KENNEDY, Marcus, 40479 Düsseldorf (DE); MATZ, Marc-Manuel, 86438 Kissing (DE)
(74) Vertreter: Becker Kurig Straus
(86) Internationale Anmeldenummer: PCT/EP2012/054797
(87) Internationale Veröffentlichungsnummer: WO 2013/007401

(56) Entgegenhaltungen:
- WO-A1-2010/115448
- WO-A2-02/24970
- DE-A1-102009 031 375

## Beschreibung

Die vorliegende Erfindung betrifft eine Verschleißschutzschicht, die vorzugsweise bei Kolbenringen von Verbrennungskraftmaschinen Verwendung findet. Insbesondere ist eine Verschleißschutzschicht in Form einer Beschichtung für einen derartigen Kolbenring beschrieben und ein Verfahren zum Auftragen der Verschleißschutzschicht beziehungsweise zur Herstellung eines Kolbenringes mit derartiger Verschleißschutzschicht.

### Stand der Technik

Kolbenringe sind Dichtelemente auf dem Kolben, beispielsweise eines Verbrennungskraftmotors oder eines Kolbenverdichters. In einem Verbrennungskraftmotor dichten Kolbenringe den zwischen Kolbenkopf und Zylinderwand vorhandenen Spalt gegenüber dem Brennraum ab. Bei der auf und ab Bewegung des Kolbens gleitet der Kolbenring einerseits mit seiner äußeren Umfangsfläche in ständiger federnder Anlage gegen die Zylinderwand, andererseits gleitet der Kolbenring, bedingt durch die Kippbewegungen des Kolbens, oszillierend in seiner Kolbenringnut, wobei seine Flanken wechselnd an der oberen oder unteren Nutenflanke der Kolbenringnut anliegen. Bei den jeweils gegeneinander laufenden Gleitpartnern tritt in Abhängigkeit des Materials ein mehr oder weniger starker Verschleiß auf, der bei einem Trockenlauf zu so genannten Fressern, Riefenbildung und schließlich zu einer Zerstörung des Motors führen kann.

Zur Herstellung hoch beanspruchter Teile von Verbrennungskraftmotoren, wie beispielsweise den Kolbenringen, werden meist Gusseisenwerkstoffe bzw. Gusseisenlegierungen verwendet. Kolbenringe, insbesondere Kompressionsringe, unterliegen in hoch beanspruchten Verbrennungsmotoren wie beispielsweise 4-Takt und 2-Takt Motoren einer zunehmenden Belastung. Unter anderem wirken ein hoher Kompressionsspitzendruck, eine hohe Verbrennungstemperatur und eine Schmierfilmreduzierung, auf den Kolbenring, die die Funktionseigenschaften wie Verschleiß, Brandspurbeständigkeit, Microwelding und Korrosionswiderstand maßgeblich beeinflussen.

Höhere Zünddrücke, reduzierte Emissionen sowie die Kraftstoff-Direkteinspritzung bedeuten weiter steigende Belastungen für Kolbenringe. Die Folge sind Beschädigungen und Aufplattierungen von Kolbenmaterial vor allem auf der unteren Kolbenringflanke.

Aufgrund der höheren mechanischen und dynamischen Beanspruchungen von Kolbenringen fordern immer mehr Motorenhersteller Kolbenringe aus hochwertigem Stahl (vergütet und hochlegiert, wie beispielsweise Werkstoff 1.4112). Hierbei bezeichnet man Eisenwerkstoffe mit weniger als 2,08 Gew.-% Kohlenstoff als Stahl. Liegt der Kohlenstoffgehalt höher, so redet man von Gusseisen. Stahlwerkstoffe besitzen gegenüber Gusseisen bessere Festigkeits-und Zähigkeitseigenschaften, da keine Störung durch freien Graphit im Grundgefüge vorhanden ist. Meist werden hochchromlegierte martensitische Stähle für die Herstellung von Stahlkolbenringen eingesetzt.

Um zusätzlich das Gleit- und Verschleißverhalten von Kolbenringen gegenüber der Zylinderwand zu verbessern, werden diese an deren Umfangsfläche mit Beschichtungen aus unterschiedlichen Materialien versehen. Derartige Beschichtungen enthalten beispielsweise Molybdän, Chrom, Nickel, Bor, Silizium, Aluminium, Kupfer und/oder Kohlenstoff. Eine käuflich erwerbbare Kolbenringbeschichtung ist unter dem Produktnamen MKP200 bekannt und enthält ein Komposit aus Molybdän und Cr₂C₃-NiCr.

Kolbenringe mit derartigen Beschichtungen weisen allerdings für zukünftige Motorengenerationen einen zu geringen Verschleiß-, Brandspur- und Korrosionswiderstand auf. Eine Ursache dafür liegt in der hohen Porosität der Schutzschicht von ungefähr 10-15 %, sowie in einer Limitierung des Anteils an verschleißresistenten Anteilen in der Schicht aufgrund des verwendeten Aufspritzverfahrens.

Auch die DE 10 2009 031 375 A1 beschreibt mit einer Verschleißschutzschicht beschichtete Kolbenringe, wobei die Beschichtung einen Molybdängehalt von 1 bis 5 Gew.-% aufweist.

### Beschreibung der Erfindung

Folglich ist eine Aufgabe der vorliegenden Erfindung die Bereitstellung einer verbesserten Verschleißschutzschicht sowie eines Beschichtungsverfahrens und eines mit einer derartigen Verschleißschutzschicht beschichteten Kolbenrings, wobei eine Eisenbasislegierung zusammen mit Molybdän und Wolframkarbid Verwendung findet.

Diese Aufgabe wird erfindungsgemäß durch eine Verschleißschutzschicht gelöst, die aus den folgenden Elementen im angegebenen Anteil besteht:
15 - 25 Gew.% Eisen (Fe),
10 - 25 Gew.% Wolframkarbid (WC),
30 - 40 Gew.% Chrom (Cr),
10 - 25 Gew.% Nickel (Ni),
10 - 25 Gew.% Molybdän (Mo),
1-10 Gew.% Kohlenstoff (C),
0,1-2 Gew.% Silizium (Si),
wobei Cr in elementarer Form und/oder als Karbid in Form von Cr₂C₃ vorliegt.

Die Inhaltsstoffe sind derart enthalten, dass die Summe aller genannten oder nicht explizit genannten Ausgangsmaterialien, Bestandteile, Inhaltsstoffe, Elemente und Zusatzstoffe in jedem Fall 100 Gew.% ergibt. Der Anteil an Ausgangsmaterialien, Bestandteilen, Inhaltsstoffen, Elementen und Zusatzstoffen kann durch verschiedene, dem Fachmann bekannte Verfahren eingestellt werden.

Erfindungsgemäß werden bei einem Gesamtanteil von 15 bis 50 Gew.% Karbiden die folgenden Karbidkonzentrationen eingehalten:
10 - 25 Gew.% WC und
5 - 30 Gew.% Cr₂C₃.

Durch die Verwendung von Karbiden in der erfindungsgemäßen Verschleißschutzschicht wird der Brandspur- und Verschleißwiderstand weiter erhöht.

Zum Auftragen der Verschleißschutzschicht wird bevorzugt ein thermischer Spritzprozess eingesetzt, besonders bevorzugt ist hier das HVOF Verfahren (abgeleitet von High-Velocity-Oxygen-Fuel), also ein Hochgeschwindigkeits-Flammspritzverfahren. Die zur Herstellung der Verschleißschutzschicht zu verwendenden Inhaltsstoffe werden dabei als Pulvermaterialien eingesetzt. Die Anwendung des HVOF Verfahrens ergibt eine besonders dichte thermische Beschichtung auf dem zu beschichtenden Substrat.

Die Partikelgrößen der verwendeten Pulver liegen vorzugsweise im Bereich von 1-80 µm. Die einzelnen Karbide weisen vorzugsweise eine Partikelgröße von 0,1-5 µm auf und können in einer NiCr-Matrix eingebettet sein. Die Karbide können dabei entweder über agglomerierte und gesinterte Partikel oder als primär ausgeschiedene Karbide vorliegen. Vorzugsweise sind sie in einer NiCr-Matrix eingebettet.

Hinsichtlich der physikalischen Eigenschaften der Verschleißschutzschicht (wie beispielsweise Wärmeleitfähigkeit, thermischer Ausdehnungskoeffizient) entsteht durch einen Mindestanteil des eisenhaltigen Basissystems von 15 Gew.% ein quasi-homogenes System zwischen dem Substrat und seiner Beschichtung. Dadurch kann die während der Mischreibung - insbesondere im Bereich des oberen Totpunktes und des unteren Totpunktes beim Kolbenmotor - entstehende thermische Energie besser abgeführt und ein gleichmäßiger thermischer Relaxationsprozess durch beispielsweise die in einem Motor vorliegenden Temperaturschwankungen gewährleistet werden.

Die Anwendung der erfindungsgemäßen Eisenbasislegierung als Kolbenringbasisbeschichtungsmaterial zusammen mit Molybdän und Wolframkarbid als Verschleißschutzschicht führt daher zu einem neuen Kolbenringtyp mit verbesserten Eigenschaften in Bezug auf Verschleiß-, Brandspur- und Korrosionswiderstand.

Deshalb stellt die vorliegende Erfindung ebenfalls einen mit der Verschleißschutzschicht beschichteten Kolbenring bereit. Der zu beschichtende Kolbenring kann dabei jeglicher Kolbenringtyp sein, beispielsweise ein Guss- oder ein Stahlkolbenring. Der Kolbenring wird vorzugsweise mittels eines thermisches Spritzprozesses, bevorzugt dem HVOF-Verfahren und besonders bevorzugt mittels des erfindungsgemäßen Beschichtungsverfahrens mit der Verschleißschutzschicht beschichtet.

Ein derartig beschichteter Kolbenring weist vorzugsweise eine Schichtdicke der Beschichtung im Bereich von 20-1000 µm auf.

Gemäß einer Ausführungsform der vorliegenden Erfindung beträgt die Härte der Beschichtung eines Kolbenringes beschichtet mit der erfindungsgemäßen Verschleißschutzschicht von 550 - 950 HV 1 (Härteprüfung nach Vickers).

Derartige beschichtete Kolbenringe finden vor allem in Verbrennungskraftmaschinen Verwendung. Dabei bedingen die bei einer derartigen Verwendung vorkommenden schwefelhaltigen Öle eine Reaktion des Molybdäns in der Verschleißschutzschicht des Kolbenrings mit dem Schwefel zu MoS₂, das wiederum aufgrund seiner Kristallstruktur ein ausgezeichneter Festschmierstoff ist. Durch diese Reaktion wird die Brandspur- oder Fressneigung des Tribosystems verbessert. MoS₂ besitzt ein typisches Schichtgitter, das aus einer Anordnung von Schwefel-Metall-Schwefel-Ebenen parallel zur hexagonalen Basisebene (001) besteht. Innerhalb dieser Ebenen existieren starke kovalente Bindungen. Jedoch sind die Ebenen nur durch schwache van-der-Waals Wechselwirkungen miteinander verbunden. Diese grafitähnliche anisotrope Schichtstruktur bestimmt die geringe Materialhärte und die ausgezeichnete Spaltbarkeit entlang der (001)-Ebenen mit der Folge, dass ausgezeichnete Notlaufeingenschaften erreicht werden.

### Beispiele

### I. Verschleißschutzschichten

Die folgenden Verschleißschutzschichten wurden miteinander verglichen:
V1: Eine Komposit aus Mo und Cr₂C₃-NiCr (Bezeichnung MKP200, Serienprodukt von Federal-Mogul) als Referenz; und
V2: Ein 2-phasiges Gemisch (Phase 1: Mo + Cr₂C₃-NiCr; Phase 2: FeCr-Basis + WC/Cr₂C₃-NiCr), wobei
   V2a: Mischungsverhältnis Phase 1 zu Phase 2 = 40/60
   V2b: Mischungsverhältnis Phase 1 zu Phase 2 = 25/75

Variante 1 wurde mittels Plasmaspritzverfahren aufgebracht, Varianten 2a und 2b mittels HVOF Verfahren.

Tabelle 1 zeigt die chemische Zusammensetzung der im Test verwendeten Verschleißschutzschichten.

**Tabelle 1: Chem. Zusammensetzung der verschiedenen Verschleißschutzschichten**

| **Variante** | **Chemische Zusammensetzung** | | | | | | |
|---|---|---|---|---|---|---|---|
| | **Fe** | **WC** | **Cr** | **Ni** | **Mo** | **C** | **Si** |
| **#** | **(Gew**.**%)** | | | | | | |
| V1 | - | - | 17 | 16 | 60 | - | - |
| V2a | 22 | 12 | 33 | 17 | 13 | 3,6 | 0,5 |
| V2b | 19 | 14 | 35 | 18 | 15 | 3,1 | 0,4 |

### II. Experimente

Für die unterschiedlichen Varianten wurden die Mikrostruktur, die Porosität und Härte, sowie das Verschleiß- und Brandspurverhalten geprüft.

In einem ersten Versuch wurde mittels Licht- und Rasterelektronenmikroskopie die Mikrostruktur und die Phasenverteilung untersucht.

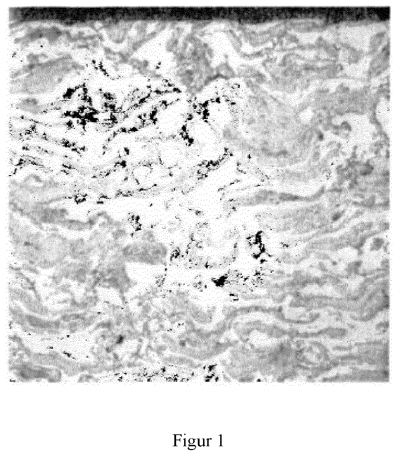

Aus Figur 1, die die Mikrostruktur der Variante V1 durchs Lichtmikroskop (Querschnitt geätzt nach Murakami) zeigt, ist zu erkennen, dass die Variante 1 wenige unaufgeschmolzenen Partikel aufweist, ebenso homogen verteilte Cr₂C₃ Bereiche in einer NickelChrom Matrix zusammen mit Molybdän. Porositätsuntersuchungen ergaben eine Porosität der Variante 1 von maximal 10 %.

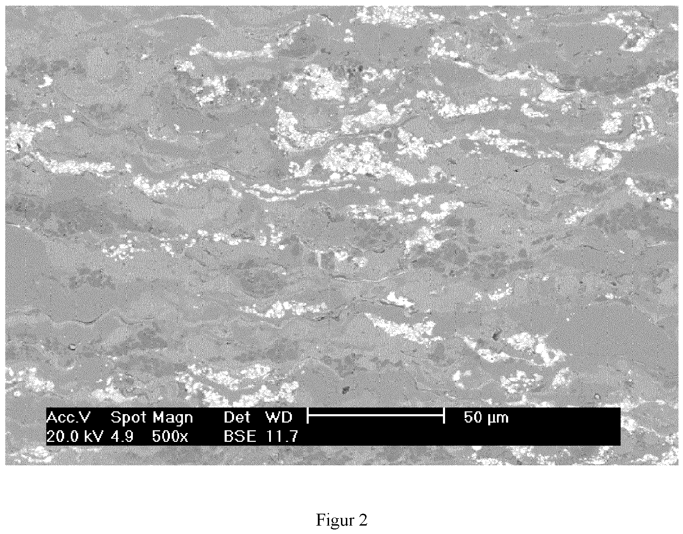

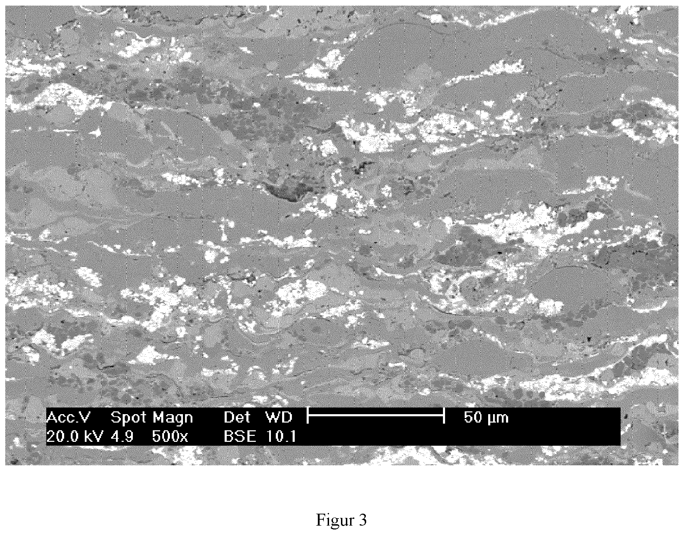

Aus Figuren 2 und 3, die die Mikrostruktur der Varianten V2a bzw. V2b mittels REM zeigen, ist ersichtlich, dass bei den Varianten V2a und V2b Karbide und Molybdän homogen verteilt sind. WC und Cr₂C₃ Bereiche in einer NiCr-Matrix sind ebenfalls vorhanden. Unaufgeschmolzene Partikel sind nicht zu erkennen. Porositätsuntersuchungen ergaben eine Porosität bei beiden Varianten V2a und V2b von ca. 1 %.

In Figuren 1 bis 3 entsprechen die groberen hellen Bereiche Wolframcarbid, die sehr flachen, ebenfalls hellen Bereiche Molybdän, die mittelgrauen Nickel und die dunkelgrauen Cr₂C₃ bzw. den FeCr-haltigen Phasen.

Aus Figur 3 wird anhand der größeren groben und hellen Bereiche (entsprechen Wolframcarbid) deutlich, dass eine Erhöhung der Phase 2, also des Gehalts an FeCr-Basis + WC/Cr₂C₃-NiCr, zu einer Erhöhung der Karbidkonzentration in der Verschleißschutzschicht führt.

In Tabelle 2 sind die ermittelten Werte hinsichtlich Porosität und mechanischer Eigenschaften zusammengefasst.

**Tabelle 2: Eigenschaften der verschiedenen Verschleißschutzschichten**

| **Versuch** | **Karbidanteil Soll** | **Härte** | **Porosität** |
|---|---|---|---|
| **#** | **(Gew.%)** | **HV1** | **%** |
| V1 | 20 | 390-660 | 9 |
| V2a | 30 | 591-815 | 1 |
| V2b | 40 | 673-896 | 1 |

Anhand von Tabelle 2 können sich folgende Rückschlüsse ziehen lassen. Erstens, die Porosität konnte durch den Einsatz des HVOF Verfahren bereits reduziert werden (V1 wurde mittels Plasmaspritzverfahren ausgebracht) und zweitens, eine Erhöhung der Karbidkonzentration führt zu einer Erhöhung der Härte der Verschleißschutzschicht.

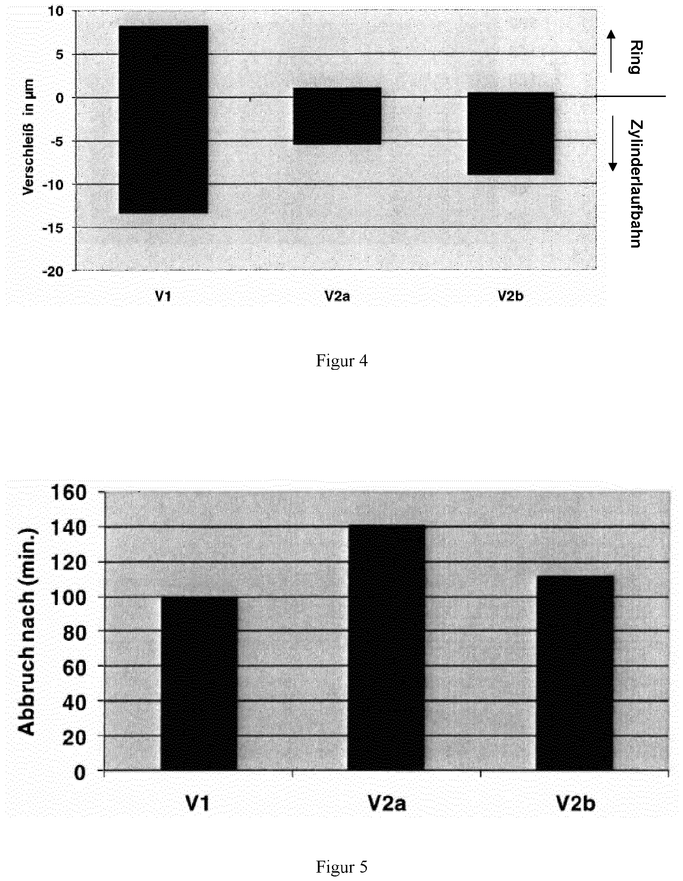

Zusätzlich zu den vorstehenden Untersuchungen wurden außermotorische Verschleiß- und Brandspurtests durchgeführt. Dazu wurde ein Segment eines beschichteten Gleitelements in einer Halterung fixiert und mit einer konstanten Kraft und Geschwindigkeit oszillierend über einen Gegenkörper in einem Ölbad bewegt. Die Ergebnisse sind in Figuren 4 und 5 dargestellt, wobei Figur 4 den Ring- und Zylinderlaufbahnverschleiß nach außermotorischer Prüfung in einem geschmierten Ring/Zylinder System darstellt und Figur 5 die Brandspurbeständigkeit in einem mangelgeschmierten Ring/Zylinder System.

Durch die Verwendung einer erfindungsgemäßen Verschleißschutzschicht mit einer gegenüber der aus dem Stand der Technik bekannten Schutzschicht veränderten Zusammensetzung konnte eine erhebliche Verbesserung des Verschleißwiderstands erreicht werden (siehe Fig. 4). Dies führt zu einer Reduzierung des Ring- und Zylinderlaufbahnverschleißes.

In einem weiteren Experiment wurde das Brandspurverhalten untersucht. Dazu wurde prinzipiell der gleiche Versuchsaufbau wie für die Verschleißprüfung verwendet. Jedoch wurde ein Mangelschmierzustand erzeugt und die Last in konstanten Zeitintervallen erhöht. Die Messung wurde abgebrochen, sobald der Reibungskoeffizient der Gleitreibung > 0,3 ist. Die Varianten V2a und V2b zeigten ein deutlich verbessertes Brandspurverhalten als die Variante V1 (siehe Fig. 5). Der geringere Karbidanteil sowie ein geringerer Aufschmelzgrad der Variante V2b führt zu einer gegenüber V2a reduzierten Brandspurbeständigkeit.

Aus den vorstehenden Versuchsergebnissen geht hervor, dass die erfindungsgemäße Verschleißschutzschicht deutlich verbesserte Eigenschaften aufweist und dass ein mit der Verschleißschutzschicht beschichteter Kolbenring eine erhöhte Verschleiß- und Brandspurbeständigkeit zeigt.

## Patentansprüche

1. Verschleißschutzschicht für Kolbenringe, bestehend aus:
15 - 25 Gew.% Eisen (Fe),
10 - 25 Gew.% Wolframkarbid (WC),
30 - 40 Gew.% Chrom (Cr),
10 - 25 Gew.% Nickel (Ni),
10 - 25 Gew.% Molybdän (Mo),
1-10 Gew.% Kohlenstoff (C),
0,1-2 Gew.% Silizium (Si),
wobei Cr in elementarer Form und/oder als Karbid in Form von Cr₂C₃ vorliegt, wobei bei einem Gesamtanteil von 15 bis 50 Gew.% Karbiden die folgenden Karbidkonzentrationen eingehalten werden:
10 - 25 Gew.% WC, und
5 - 30 Gew.% Cr₂C₃.

2. Verfahren zum Auftragen einer Verschleißschutzschicht nach Anspruch 1, umfassend die Schritte:
(i) Bereitstellen der Inhaltsstoffe in Pulverform, und
(ii) Hochgeschwindigkeits-Flammspritzen (HVOF-Verfahren) der Inhaltsstoffe auf ein Substrat.

3. Verfahren nach Anspruch 2, wobei die Partikelgrößen der Elementpulver in einem Bereich von 1 - 80 µm liegen und die Partikelgröße der verwendeten Karbide in einem Bereich von 0,1 - 5 µm.

4. Verfahren nach Anspruch 3, wobei die Karbide als agglomerierte und gesinterte Partikel oder als primär ausgeschiedene Karbide vorliegen.

5. Verfahren nach Anspruch 4, wobei die Karbide in einer NiCr-Matrix eingebettet sind.

6. Verfahren nach einem der Ansprüche 2 - 5, wobei das Substrat ein Kolbenring ist.

7. Verfahren nach Anspruch 6, wobei der Kolbenring ein Guss- oder Stahlkolbenring ist.

8. Kolbenring, **dadurch gekennzeichnet, dass** der Kolbenring mit einer Verschleißschutzschicht nach Anspruch 1 beschichtet ist.

9. Kolbenring nach Anspruch 8, wobei die Schichtdicke der Beschichtung im Bereich von 20 - 1000 µm liegt.

10. Kolbenring nach Anspruch 8 oder 9, wobei die Härte der Beschichtung im Bereich von 550 - 950 HV 1 liegt.

11. Kolbenring nach einem der Ansprüche 8 - 10, wobei die Beschichtung mittels HVOF-Verfahren aufgetragen ist.

12. Kolbenring nach einem der Ansprüche 8 - 10, wobei die Beschichtung mittels eines Verfahrens nach einem der Ansprüche 2 bis 5 aufgetragen ist.

13. Kolbenring nach einem der Ansprüche 8 - 12, wobei der Kolbenring ein Guss- oder Stahlkolbenring ist.

## Claims

1. A wear resistant coating for piston rings, consisting of:
15-25% by weight iron (Fe),
10-25% by weight tungsten carbide (WC),
30-40% by weight chromium (Cr),
10-25% by weight nickel (Ni),
10-25% by weight molybdenum (Mo),
1-10% by weight carbon (C),
0.1-2% by weight silicon (Si),
wherein Cr is present in elemental form and/or as carbide in the form of Cr₂C₃, wherein in a total proportion of 15 to 50% by weight carbides, the following carbide concentrations are contained:
10-25% by weight WC, and
5-30% by weight Cr₂C₃.

2. A method for applying a wear-resistant layer according to claim 1, comprising the steps of:
(i) providing the ingredients in powder form, and
(ii) high-speed flame spraying (HVOF process) the ingredients onto a substrate.

3. The method according to claim 2, wherein the particle sizes of the elemental powders are in a range of 1-80 µm, and the particle size of the carbides used is in a range of 0.1-5 µm.

4. The method according to claim 3, wherein the carbides are present as agglomerated and sintered particles or as primary precipitated carbides.

5. The method according to claim 4, wherein the carbides are embedded in a NiCr matrix.

6. The method according to any of claims 2-5, wherein the substrate is a piston ring.

7. The method according to claim 6, wherein the piston ring is a cast iron or steel piston ring.

8. A piston ring, **characterized in that** the piston ring is coated with a wear-resistant layer according to claim 1.

9. The piston ring according to claim 8, wherein the layer thickness of the coating is in the range of 20-1000 µm.

10. The piston ring according to claim 8 or 9, wherein the hardness of the coating is in the range of 550-950 HV1.

11. The piston ring according to any of claims 8-10, wherein the coating is applied in an HVOF process.

12. The piston ring according to any of claims 8-10, wherein the coating is applied in a process according to any of claims 2 to 5.

13. The piston ring according to any of claims 8-12, wherein the piston ring is a cast iron or steel piston ring.

## Revendications

1. Couche de protection anti-usure pour des segments de piston, constituée de :
15 à 25 % en poids de fer (Fe),
10 à 25 % en poids de carbure de tungstène (WC),
30 à 40 % en poids de chrome (Cr),
10 à 25 % en poids de nickel (Ni),
10 à 25 % en poids de molybdène (Mo),
1 à 10 % en poids de carbone (C),
0,1 à 2 % en poids de silicium (Si),
le Cr étant présent sous forme élémentaire et/ou en tant que carbure, sous la forme de Cr₂C₃, pour une part totale de 15 à 50 % en poids de carbures, les concentrations de carbures suivantes étant respectées :
de 10 à 25 % en poids de WC et
de 5 à 30 % en poids de Cr₂C₃.

2. Procédé destiné à appliquer une couche de protection anti-usure selon la revendication 1, comprenant les étapes :
(i) de la mise à disposition des composants sous forme pulvérulente et
(ii) de la protection à la flamme haute vitesse (procédé HVOF) des composants sur un substrat.

3. Procédé selon la revendication 2, la taille des particules des éléments pulvérulents se situant dans un ordre de 1 à 80 µm et la taille des particules des carbures utilisés dans un ordre de 0,1 à 5 µm.

4. Procédé selon la revendication 3, les carbures se présentant sous la forme de particules agglomérées et frittées ou de carbures séparés de manière primaire.

5. Procédé selon la revendication 4, les carbures étant incorporés dans une matrice de NiCr.

6. Procédé selon l'une quelconque des revendications 2 à 5, le substrat étant un segment de piston.

7. Procédé selon la revendication 6, le segment de piston étant un segment de piston en fonte ou en acier.

8. Segment de piston, **caractérisé en ce que** le segment de piston est revêtu d'une couche de protection anti-usure selon la revendication 1.

9. Segment de piston selon la revendication 8, l'épaisseur de couche du revêtement se situant dans l'ordre de 20 à 1000 µm.

10. Segment de piston selon la revendication 8 ou 9, la dureté du revêtement se situant dans l'ordre de 550 à 950 HV 1.

11. Segment de piston selon l'une quelconque des revendications 8 à 10, le revêtement étant appliqué au moyen d'un procédé HVOF.

12. Segment de piston selon l'une quelconque des revendications 8 à 10, le revêtement étant appliqué au moyen d'un procédé selon l'une quelconque des revendications 2 à 5.

13. Segment de piston selon l'une quelconque des revendications 8 à 12, le segment de piston étant un segment de piston en fonte ou en acier.
